# EUROPEAN PATENT APPLICATION

(11) **EP 4 116 530 A1**
(43) Date of publication of application: **11.01.2023**
(21) Application number: 21763784.2
(22) Date of filing: 25.02.2021
(51) Int. Cl.: E05D 5/06

(54) **HOOD HINGE BRACKET AND VEHICLE**

(30) Priority: 03.03.2020 CN 202010140020
(71) Applicant: PSA Automobiles SA, 78300 Poissy (FR)
(72) Inventor: DU, Nan, Shanghai 200233 (CN); XI, Jiahao, Shanghai 200233 (CN); ZHU, Yi, Shanghai 200233 (CN); WANG, Ziye, Shanghai 200233 (CN); CHEN, Sengen, Shanghai 200233 (CN); YANG, Kekai, Shanghai 200233 (CN)
(86) International application number: PCT/CN2021/077814
(87) International publication number: WO 2021/175145

(57) **Abstract**

A hood hinge bracket (60), comprising: a hinge plate (61), which is connected to a leaf plate (70) of a vehicle; and a bracket part (62), which is connected to the hinge plate (61) and is used to connect a fender (20) of the vehicle to an air intake grill (30).

## Description

### CROSS-REFERENCE TO RELATED APPLICATION

The present application claims priority to Chinese patent application, No. 202010140020.4, filed on March 03, 2020 and entitled "Hood Hinge Bracket and Vehicle", which is hereby incorporated by reference in its entirety.

### TECHNICAL FIELD

The present application relates to the field of vehicle spare parts, in particular to a hood hinge bracket for fixing a fender and an air intake finisher, and a vehicle including the hood hinge bracket.

### BACKGROUND

Generally, a hood for opening and closing the engine room of a vehicle is fixed to a vehicle body by a hood hinge, and the traditional hood hinge fixes a fender and a lateral air intake finisher by an integrated bracket.

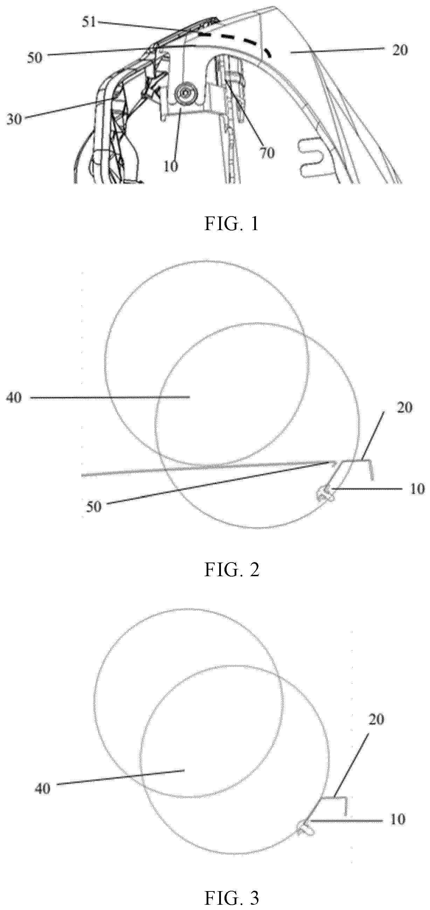

FIG. 1 shows the state in which a traditional hood hinge integrated bracket 10 is connected to a fender 20 and an air intake finisher 30, however, it is difficult to improve the pedestrian protection provided by the traditional hood hinge integrated bracket 10 due to the design restriction of a cutting line 50 between the hood and the fender 20. Fig. 2 shows the state in which a pedestrian's head 40 hits an area of the traditional hood hinge integrated bracket 10. At this time, since the hood hinge integrated bracket 10 is integrally formed, it is difficult to collapse when hit by the pedestrian's head. As a result, an impact on the pedestrian's head can not be well reduced and the pedestrian may be seriously injured.

In addition, due to the shape design of the integrally formed hood hinge integrated bracket 10, that is, the bracket is required to be bent from a hinge plate, the utilization of materials is insufficient and cost will be wasted.

### SUMMARY

### (1) Problems to be solved

The first object of the present application is to: provide a hood hinge bracket capable of improving the protection for a pedestrian while saving manufacturing cost, to solve the problem in that the hood hinge bracket in related art cannot protect the head of a pedestrian owing to the difficulty in collapsing.

The second object of the present application is to: provide a vehicle including a hood hinge bracket capable of improving the protection for a pedestrian while saving manufacturing cost, to solve the problem in that the hood hinge bracket in related art cannot protect the head of a pedestrian owing to the difficulty in collapsing.

### (2) Solutions

In order to solve the above described problems, in an aspect, the present application provides a hood hinge bracket, including: a hinge plate, connected to a blade of a vehicle; and a bracket part, connected to the hinge plate and used to connect a fender and an air intake finisher of the vehicle.

In an embodiment, the hinge plate includes a hinge part and is connected to the blade through the hinge part.

In an embodiment, the bracket part further includes: a welding part, connected to the hinge plate; a bending part with one end connected to the welding part, used to fix the fender; and a clip part, connected to another end of the bending part and used to connect the air intake finisher, where the welding part, the bending part and the clip part are integrally formed.

In an embodiment, the bending part further includes: a first portion having a plate-like shape with one end connected to the welding part and forming a first angle with an extending direction of the welding part; and a second portion having a plate-like shape, connected to another end of the first portion and forming a second angle with the first portion.

In an embodiment, the clip part forms a third angle with an extending direction of the second portion.

In an embodiment, the second portion is provided with a bolt hole, through which the second portion is connected to the fender by bolting.

In an embodiment, the clip part is provided with a clip hole, through which the clip part is connected to the air intake finisher in clipping connection manner.

In an embodiment, the welding part is connected to the hinge plate by welding.

In an embodiment, a thickness of the bracket part is smaller than a thickness of the hinge plate.

In an embodiment, there is also provided a vehicle including the above described hood hinge bracket.

### (3) Beneficial effects

The above mentioned solutions of the present application has the following advantages.

One aspect of the present application provides a hood hinge bracket, including: a hinge plate connected to a blade of a vehicle; and a bracket part connected to the hinge plate and used to connect a fender and an air intake finisher of the vehicle. The hood hinge bracket according to the embodiment of the present application can not only increase the collapsing force of the hood hinge bracket when it is impacted through the separated hinge plate and the bracket part to improve the pedestrian protection, but also reduce the manufacturing cost of the hood hinge bracket by saving materials in the manufacturing process.

### BRIEF DESCRIPTION OF DRAWINGS

FIG. 1 is a schematic diagram showing the state in which a traditional hood hinge integrated bracket is connected to a fender and an air intake finisher.
FIG. 2 is a schematic diagram showing the state in which a pedestrian's head hits an area of an traditional hood hinge integrated bracket.
FIG. 3 is a schematic diagram showing a pedestrian's head hits a hood hinge bracket in an ideal state.
FIG. 4 is a schematic diagram showing the state in which a pedestrian's head hits an improved traditional hood hinge integrated bracket.
FIG. 5 is a schematic diagram of a hood hinge bracket according to an embodiment of the present application.
FIG. 6 is a schematic diagram of a hood hinge bracket at another angle according to an embodiment of the present application.
FIG. 7 is a schematic diagram showing the material utilization of a hood hinge bracket according to an embodiment of the present application and a traditional hood hinge integrated bracket.

In the drawings: 10-hood hinge integrated bracket; 20-fender; 30-air intake finisher; 40-head; 50-cutting line; 51-ideal position; 60-hood hinge bracket; 61-hinge plate; 611-hinge part; 62-bracket part; 621-welding part; 622-bending part; 6221-first portion; 6222-second portion; 623-clip part; 70-blade; 81-first angle; 82-second angle; 83-third angle.

### DETAILED DESCRIPTION OF THE EMBODIMENTS

In order to make the objectives, solutions and advantages of the embodiments of the present application more clear, the solutions according to the embodiments of the present application will be described clearly and completely below in conjunction with the accompanying drawings in the embodiments of the present application. It should be noted that the embodiments described are some of the embodiments of the present application rather than all the embodiments. Based on the embodiments in this application, all other embodiments obtained by those of ordinary skill in the art without making creative effort fall within the scope of protection of the application.

In the description of the present application, it is to be noted that, the orientation or positional relations specified by terms such as "central", "longitudinal", "transverse", "upper", "lower", "front", "back", "left", "right", "vertical", "horizontal", "top", "bottom", "inner", "outer" and the like, are based on the orientation or positional relations shown in the drawings, which is merely for convenience of description of the present application and to simplify description, but does not indicate or imply that the stated devices or components must have the particular orientation and be constructed and operated in the particular orientation, and thus it is not to be construed as limiting the present application. Furthermore, the terms "first", "second", "third" and the like are only used for descriptive purposes and should not be construed as indicating or implying a relative importance.

In addition, the terms "first", "second", "third", etc., are used for descriptive purposes only and are not to be construed as indicating or implying relative importance.

In the description of the present application, it is to be noted that, unless explicitly specified and defined otherwise, the terms "mounted ", "connected to" and "connected" shall be understood broadly, for example, it may be either fixedly connected or detachably connected or can be integrally connected; it may be either mechanically connected, or electrically connected; it may be either directly connected, or indirectly connected through an intermediate medium; or it may be a communication between two components. For those of ordinary skill in the art, the specific meaning of the above terms in this application can be understood on a case-by-case basis.

In addition, in the description of this application, unless otherwise specified, "plurality", "multiple", "plural" means two or more.

Refer to FIG.1 and FIG. 2, in order to reduce the impact on a pedestrian's head 40 as hit, an ideal cutting line 50 should move upward on the basis of related art, so that when the pedestrian's head 40 is hit, pedestrian's head 40 only contacts with a hard point, namely a screw used to fix a fender 20 on a hood hinge integrated bracket 10. In an ideal state, the head 40 hitting a hood hinge bracket is shown in FIG. 3. However, due to engineering design constraints, the cutting line 50 between a hood and the fender 20 cannot be located at an ideal position 51 as shown in FIG. 1 and FIG. 3, and in this case, the hood may not be opened.

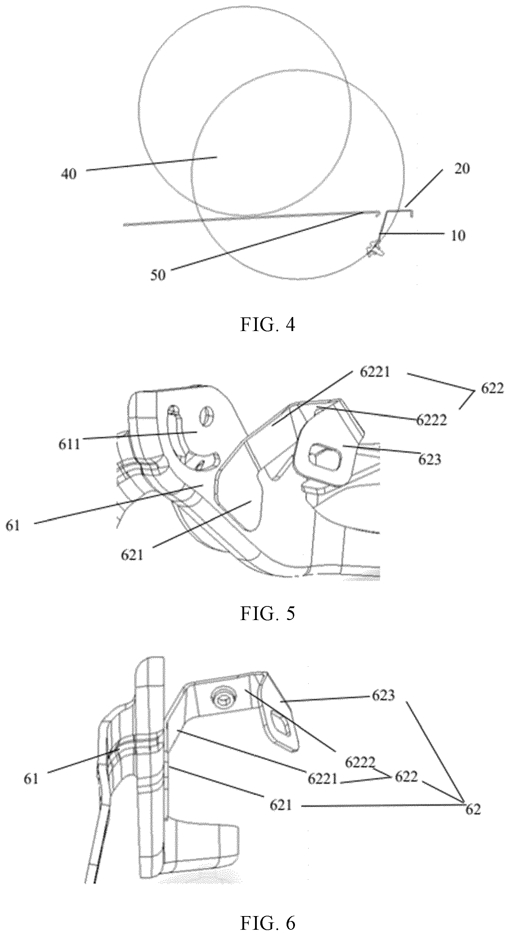

Another method is to improve the fender 20 so that the impact on the pedestrian's head can be reduced when the pedestrian is hit, or to improve the draft angle of the fender 20 so that a moving area of the pedestrian's head 40 avoids a connecting area of the improved fender 20 and the hood hinge integrated bracket 10 when the pedestrian is hit, as shown in FIG. 4. However, neither the improvement of the connection area of the fender 20 nor the improvement of the draft angle of the fender 20 can realize the improved purpose well, and such improvement method may lead to an increase in the forming procedures of the fender 20, or the perceive quality may not be accepted by customer due to the flange angle issue of the fender 20.

FIG. 5 and FIG. 6 are schematic diagrams of a hood hinge bracket 60 according to an embodiment of the present application. The hood hinge bracket 60 according to the embodiment of the present application includes two portions which are a hinge plate 61 connected to a blade 70 of the vehicle, and a bracket part 62 connected to the hinge plate 61 and used to connect the fender 20 and the air intake finisher 30 of the vehicle.

In an embodiment, the hinge plate 61 includes a hinge part 611, and the hinge plate 61 is connected to the blade 70 of the vehicle though the hinge part 611 in a hinge manner. In addition, the bracket part 62 further includes: a welding part 621 connected to the hinge plate 61; a bending part 622 with one end connected to the welding part 621 and used to fix the fender 20; and a clip part 623 connected to the other end of the bending part 622 and used to connect the air intake finisher 30. The welding part 621, the bending part 622 and the clip part 623 are integrally formed as the bracket part 62.

Further, the bracket part 62 is connected to the hinge plate 61 through the welding part 621 in a weld manner, where a welding point is located near to the bottom of the hinge plate 61. The extending direction of the welding part 621 and the bending part 622 form a first angle 81, and the larger the first angle 81, the better the collapsibility of the bracket part 62 of the hood hinge bracket 60 after the pedestrian's head 40 hits on the hood hinge bracket 60, thereby providing good pedestrian protection.

Further, the bending part 622 includes: a first portion 6221 having a plate-like shape with one end connected to the welding part 621 and forming the first angle 81 with the extending direction of the welding part 621; and a second portion 6222 having a plate-like shape connected to the other end of the first portion 6221 and forming a second angle 82 with the first portion 6221. The second portion 6222 of the bending part 622 is provided with a bolt hole, through which the hood hinge bracket 60 according to the embodiment of the present application is connected to the fender 20 of the vehicle by bolting.

Further, the clip part 623 forms a third angle 83 with the extension direction of the second portion 6222 of the bending part 622, and the clip part 623 is provided with a clip hole thereon, through which the air intake finisher 30 can be fixed to the hood hinge bracket 60 according to the embodiment of the present application in clipping connection manner.

In order to further enhance the collapsing force of the hood hinge bracket 60 upon impact, the thickness of the bracket part 62 can be made smaller than the thickness of the hinge plate 61.

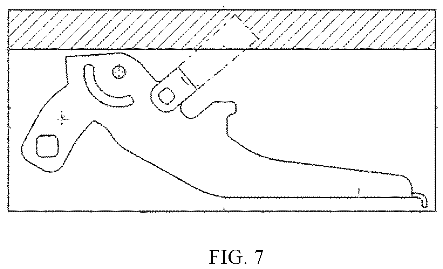

On the other hand, as shown in FIG. 7, the shaded portion in FIG. 7 represents an additional metal plate area required when manufacturing the traditional hood hinge integrated bracket compared to the hood hinge bracket according to the embodiment of the present application. Since the hood hinge bracket according to the embodiment of the present application does not need to integrally form the bracket part on the hinge plate, the required size of the metal plate during manufacturing process is smaller compared with the traditional hood hinge integrated bracket, which can reduce the waste of materials and thus save manufacturing cost.

According to an embodiment of the present application, there is also provided a vehicle including the above described hood hinge bracket.

In summary, the present application provides a hood hinge bracket, including a hinge plate connected to a blade of a vehicle; and a bracket part connected to the hinge plate and used to connect a fender and an air intake finisher of the vehicle. The hood hinge bracket according to the embodiment of the present application can not only increase the collapsing force of the hood hinge bracket when it is impacted through the separated hinge plate and the bracket part to improve the pedestrian protection, but also reduce the manufacturing cost of the hood hinge bracket by saving materials in the manufacturing process.

Finally, it should be noted that the above embodiments are only used to illustrate the solutions of the present application, but not to limit them; although the present application has been described in detail with reference to the foregoing embodiments, those of ordinary skill in the art should understand that the technical solutions recorded by the foregoing embodiments can be modified, or some of the features therein can be equivalently replaced; and these modifications or replacements do not make the essence of the corresponding solutions depart from the scope of the solutions of various embodiments of the present application.

## Claims

1. A hood hinge bracket, comprising:
a hinge plate, connected to a blade of a vehicle; and
a bracket part, connected to the hinge plate and used to connect a fender and an air intake finisher of the vehicle.

2. The hood hinge bracket according to claim 1, wherein,
the hinge plate comprises a hinge part and is connected to the blade through the hinge part.

3. The hood hinge bracket according to claim 1, wherein,
the bracket part further comprises:
a welding part, connected to the hinge plate;
a bending part with one end connected to the welding part, used to fix the fender; and
a clip part, connected to another end of the bending part and used to connect the air intake finisher, wherein,
the welding part, the bending part and the clip part are integrally formed.

4. The hood hinge bracket according to claim 3, wherein,
the bending part further comprises:
a first portion having a plate-like shape with one end connected to the welding part and forming a first angle with an extending direction of the welding part; and
a second portion having a plate-like shape, connected to another end of the first portion and forming a second angle with the first portion.

5. The hood hinge bracket according to claim 4, wherein,
the clip part forms a third angle with an extending direction of the second portion.

6. The hood hinge bracket according to claim 5, wherein,
the second portion is provided with a bolt hole, through which the second portion is connected to the fender by bolting.

7. The hood hinge bracket according to claim 3, wherein,
the clip part is provided with a clip hole, through which the clip part is connected to the air intake finisher in clipping connection manner.

8. The hood hinge bracket according to claim 3, wherein,
the welding part is connected to the hinge plate by welding.

9. The hood hinge bracket according to claim 1, wherein,
a thickness of the bracket part is smaller than a thickness of the hinge plate.

10. A vehicle, comprising the hood hinge bracket according to any one of claims 1-9.
